# EUROPÄISCHE PATENTSCHRIFT

(11) **EP 3 618 611 B1**
(45) Veröffentlichungstag und Bekanntmachung des Hinweises auf die Patenterteilung: **01.09.2021**
(21) Anmeldenummer: 18719605.0
(22) Anmeldetag: 02.05.2018
(51) Int. Cl.: A01K 31/04, A01K 31/17

(54) **KOTTROCKNUNGSEINRICHTUNG**
EXCREMENT DRYER SETUP
DISPOSITIF DE SÉCHAGE DE MATIÈRES FÉCALES

(30) Priorität: 03.05.2017 EP 17169253
(43) Veröffentlichungstag der Anmeldung: 11.03.2020
(73) Patentinhaber: Inauen, Urs, 9050 Appenzell (CH)
(72) Erfinder: Inauen, Urs, 9050 Appenzell (CH)
(74) Vertreter: Frischknecht, Harry Ralph
(86) Internationale Anmeldenummer: PCT/EP2018/061177
(87) Internationale Veröffentlichungsnummer: WO 2018/202692

(56) Entgegenhaltungen:
- EP-A1- 0 108 230
- EP-A1- 0 740 900
- EP-A2- 0 360 083
- NL-A- 8 502 494
- US-A- 3 900 006
- US-A- 4 909 825
- US-A- 5 737 850
- US-A1- 2015 208 617

## Beschreibung

### TECHNISCHES GEBIET

Die vorliegende Erfindung betrifft eine Kottrocknungseinrichtung für Tierställe nach dem Oberbegriff von Anspruch 1.

### STAND DER TECHNIK

Aus dem Stand der Technik ist bekannt, dass der anfallende Kot in Tierställen, wie beispielsweise in Geflügelställen, behandelt, insbesondere getrocknet, wird.

Aus der EP 0 047 043 ist eine Anlage bekannt geworden, welche ein Kottransportband und eine Belüftungsvorrichtung umfasst. Die Belüftungsvorrichtung erstreckt sich parallel zum Kottransportband und beaufschlagt den auf dem Kottransportband liegenden Kot mit trockener Luft, so dass dieser trocknet. Die Belüftungsvorrichtung erstreckt sich dabei über die gesamte Länge des Kottransportbandes.

Nachteilig an der Anlage nach der EP 0 047 043 ist, dass die Belüftungsvorrichtung sehr viel Luft über die Gesamtlänge des Kottransportbandes einbringt. Hierdurch wird viel Energie eingesetzt, was wirtschaftlich ein Nachteil darstellt. Zudem wird der Kot nicht besonders gut belüftet. Andere Dokumente die den Stand der Technik im Bereich von Kottransport und Trocknung beschreiben sind EP 0360083 A2, US 2015/208617 A1, EP 0108230 A1 und NL 8502494 A.

### DARSTELLUNG DER ERFINDUNG

Ausgehend von diesem Stand der Technik liegt der Erfindung eine Aufgabe zugrunde, ein Verfahren sowie eine Vorrichtung anzugeben, welche die Nachteile des Standes der Technik überwindet. Insbesondere soll das Verfahren bzw. die Vorrichtung wirtschaftlich zu betreiben sein.

Diese Aufgabe löst der Gegenstand vom Anspruch 1. Demgemäss umfasst eine Kottrocknungseinrichtung für Tierställe, wie Geflügelställe ein Kottransportband zur Förderung des Kotes entlang einer Förderrichtung, wobei sich das Kottransportband über eine Förderlänge erstreckt und eine Oberseite zur Aufnahme des Kots aufweist, und eine Trocknungseinheit mit mindestens einem Abgabeelement, das mindestens eine Luftdüse oder eine Vielzahl von Luftdüsen zur Besprühung des auf dem Kottransportband liegenden Kots mit Luft zur Trocknung des Kots aufweist. Die Oberseite zur Aufnahme des Kots des Kottransportbandes ist in mehrere in Förderrichtung hintereinander liegende Kottransportbandabschnitte aufgeteilt. Jeder der Kottransportbandabschnitte nimmt eine Teilfläche der gesamten Oberseite ein. Das mindestens eine Abgabeelement ist derart angeordnet, dass dieses auf einen Wirkbereich einwirkt, welcher flächenmässig der besagten Teilfläche entspricht. Hierdurch wird der Kot mit der Fördereinrichtung in den Wirkbereich der Trocknungseinheit bzw. der Abgabevorrichtung gefahren und kann dort getrocknet werden.

Dadurch, dass die zur Trocknung eingesetzte Luft nur über einen Kottransportbandabschnitt, welcher einen Teil der gesamten Oberseite des Kottransportbandes entspricht, einwirkt, ergeht der Vorteil, dass nicht die gesamte Länge des Kottransportbandes mit Luft beaufschlagt wird. Es entfällt also die Anordnung von einem Zuluftkanal, welcher sich über die gesamte Länge eines Kottransportbandes erstreckt. Hierdurch kann die Anlage wirtschaftlicher hergestellt und auch betrieben werden. Zudem wird die Lufteinströmung durch die entsprechende Anordnung verbessert, was den Kot schneller trocknen lässt.

Die Anlage kann vorteilhaft betrieben werden, weil das Kottransportband taktweise vorwärts bewegt werden kann und so Kottransportbandabschnitt um Kottransportbandabschnitt in einer getakteten Art und Weise in den Wirkbereich der Trocknungseinheit bzw. der Abgabevorrichtung gefahren werden kann.

Weiter ergeht der Vorteil, dass der Volumenstrom der Luft höher gewählt werden kann als bei Anlagen, bei welchen Belüftungsvorrichtung über die gesamte Länge des Kottransportbandes erstreckt, weil weniger Rücksicht auf allfällige Luftverwirbelungen, welche zu Zugluft im Stall führen, genommen werden muss. Dies hat den Vorteil, dass der Entstehung von Ammoniak durch langsames Trocknen entgegen gewirkt werden kann, wobei gleichzeitig die sich im Stall befindlichen Tiere von schädlichem Durchzug verschont werden.

Die Kottrocknungseinrichtung wird vorzugsweise über 24 Stunden betrieben, was für die Trocknung des Kotes vorteilhaft wird. Insbesondere wird weniger Ammoniak gebildet. Dieser Betrieb wird wiederum wirtschaftlich möglich, weil die Luft nur selektiv auf einem Kottransportbandabschnitt der Oberseite des Kottransportbandes eingebracht wird.

Durch den 24-Stunden-Betrieb ergeht weiter ein Vorteil, dass der Kot getrocknet wird, bevor die Ammoniakbildung am intensivsten wird.

Durch Verkleinerung der Ammoniakbildung kann auf den Einbau von einer Abluftreinigungsanlage verzichtet werden. Je nach Dimensionierung kann aber dennoch eine Abluftreinigungsanlage angeordnet werden.

Durch den 24-Stunden-Betrieb ergeht weiter ein Vorteil, dass die auf dem Kottransportband liegende Menge an Kot verglichen mit Anlagen die alle Tage einmal bewegt werden, kleiner wird.

Unter der Ausdrucksweise "Oberseite" wird die in Einbaulage nach oben orientierte Fläche, auf welcher der Kot aufliegt, verstanden. Das Kottransportband ist vorzugsweise ein Förderband. Unter der Ausdrucksweise "Kottransportbandabschnitt" wird ein Teilbereich bzw. eine Teilfläche der gesamten Oberseite des Kottransportbandes verstanden.

Nach einer ersten Variante die Trocknungseinheit über dem Kottransportband angeordnet und wirkt so auf das Kottransportband ein. Das heisst mit anderen Worten: Die Oberseite zur Aufnahme des Kots des Kottransportbandes ist in mehrere in Förderrichtung hintereinander liegende Kottransportbandabschnitte aufgeteilt. Das mindestens eine Abgabeelement ist derart angeordnet, dass lediglich einer der besagten Kottransportbandabschnitte mit Luft besprüht wird.

Nach einer zweiten Variante ist die Trocknungseinheit über einem separat zum besagten Kottransportband ausgebildeten Trocknungsband angeordnet, wobei das Trocknungsband vorzugsweise eine Länge aufweist, welche dem besagten Kottransportbandabschnitt entspricht. Das Trocknungsband schliesst sich dem besagten Kottransportband an und wird von diesem mit zu trocknendem Kot versorgt. Der Vorteil des separaten Trocknungsbandes im vorliegenden Fall ist, dass das Trocknungsband für die eigentliche Trocknung ausgebildet werden kann. Insbesondere kann das Trocknungsband beispielsweise mit Öffnung versehen sein, was die Trocknung begünstigt.

Vorzugsweise erstreckt sich der Kottransportbandabschnitt über die gesamte Breite und über eine Teillänge des Kottransportbands. Der Kottransportbandabschnitt weist also eine Breite auf, welche derjenigen des Kottransportbandes entspricht, und er weist eine Länge auf, welche eines Teils der Gesamtlänge des Kottransportbandes entspricht.

Vorzugsweise ist das mindestens eine Abgabeelement derart angeordnet, dass die gesamte Breite des Kottransportbandes bzw. des Trocknungsbandes mit Luft besprühbar ist. Besonders bevorzugt erstreckt sich das mindestens eine Abgabeelement über die besagte Teilfläche bzw. innerhalb des Kottransportbandabschnittes und ist insbesondere derart angeordnet, dass die gesamte Breite des Kottransportbandes bzw. des Trocknungsbandes mit Luft besprühbar ist. Es wird aber nicht die gesamte Länge des Kottransportbandes mit Luft besprüht. Durch Besprühen der gesamten Breite wird sichergestellt, dass der zu trocknende Kot im Kottransportbandabschnitt bzw. auf dem Trocknungsband gut mit Luft besprühbar ist.

Das Abgabeelement erstreckt sich vorzugsweise nur über eine Teillänge des Kottransportbandes bzw. über das Trocknungsband, welches eine Länge aufweist, die der Teillänge entspricht. Eine Teillänge stellt einen Bruchteil der Förderlänge des Kottransportbandes dar. Das Abgabeelement kann sich in Förderrichtung und/oder quer zur Förderrichtung über die besagte Teillänge des Kottransportbandes bzw. über das Trocknungsband erstrecken.

Die Breite des Kottransportbandes bzw. des Trocknungsbandes ist vorzugsweise zwischen 0.5 bis 3.5 Metern, insbesondere zwischen 1 bis 2.8 Metern.

Vorzugsweise ist das Abgabeelement bezüglich des Kottransportbandes bzw. des Trocknungsbandes ortsfest angeordnet, wobei sich das Kottransportband bzw. das Trocknungsband relativ zum feststehenden Abgabeelement bewegt. Das Abgabeelement steht also fest zum Kotband bzw. zum Trocknungsband, was ein einfacheres Versorgen des Abgabeelementes mit Luft ermöglicht. Zudem wird nur das Kottransportband bzw. das Trocknungsband verschoben, was aufgrund seiner Ausbildung ohnehin dazu geeignet ist, wodurch die Trocknungseinheit vergleichsweise einfach ausgebildet werden kann.

Vorzugsweise ist das mindestens eine Abgabeelement im Endbereich des Kottransportbandes angeordnet. Der Endbereich des Kottransportband ist der Bereich, von welchem der Kot vom Kottransportband fällt. Das heisst, dass der Kottransportbandabschnitt, in welchem der Kot getrocknet wird, im Wesentlichen das Ende des Kottransportbandes darstellt. Dies ist vorteilhaft, weil die Trocknungseinheit am Rand eines Stalls oder gar ausserhalb des Stalls angeordnet werden kann, was wiederum vorteilhaft für die Durchzugsproblematik ist.

In einer ersten Ausführungsform erstreckt sich das mindestens eine Abgabeelement vom Ende des Kottransportband bzw. des Trocknungsbandes gegen die Förderrichtung.

In einer zweiten Ausführungsform erstreckt sich das mindestens eine Abgabeelement von einer oder beiden Seiten des Kottransportbandes bzw. des Trocknungsbandes quer zur Förderrichtung über das Kottransportband.

In einer Variante der ersten und zweiten Ausführungsform kann das mindestens eine Abgabeelement auch schlangenlinienförmig oder mäanderförmig angeordnet sein.

Vorzugsweise erstreckt sich das mindestens eine Abgabeelement nach der ersten bzw. der zweiten Ausführungsform parallel und/oder quer zur Förderrichtung beabstandet zur Oberseite des Kottransportbandes bzw. des Trocknungsbandes.

Vorzugsweise weist das mindestens eine Abgabeelement nach der ersten bzw. der zweiten Ausführungsform die Gestalt eines Rohrs auf. Das Rohr kann einen kreisrunden oder einen ovalen oder einen eckigen Querschnitt aufweisen. Die Luftdüsen durchdringen dabei die Seitenwand des Rohrs. In Richtung der Rohrachse sind vorzugsweise mehrere Düsen, insbesondere gleichmässig verteilt, angeordnet.

Unter einer Düse wird vorzugsweise eine Öffnung oder ein Loch verstanden, durch welche Luft austreten kann.

Vorzugsweise erstreckt sich das Rohr nach der ersten bzw. der zweiten Ausführungsform entlang einer als Gerade ausgebildeten Längsachse.

Vorzugsweise ist nach der ersten bzw. der zweiten Ausführungsform eine Vielzahl von Abgabeelementen angeordnet. Hierdurch kann die Luft optimal über dem Kottransportbandabschnitt bzw. dem Trocknungsband verteilt werden.

Vorzugsweise sind die Abgabeelemente nach der ersten bzw. der zweiten Ausführungsform parallel zueinander angeordnet. In einer ersten Variante verlaufen die Abgabeelemente parallel zur Förderrichtung. In einer zweiten Variante verlaufen die Abgabeelemente quer zur Förderrichtung. Unabhängig von ihrer Orientierung sind Abgabeelemente derart angeordnet, dass diese den gesamten Wirkbereich mit Luft besprühen.

Die Abgabeelemente nach der ersten bzw. der zweiten Ausführungsform stehen vorzugweise in gleichmässigen Abständen zueinander. Besonders bevorzugt sind in der ersten Ausführungsform die Abgabeelemente von der Mitte des Kottransportbandes bzw. des Trocknungsbandes ausgehend in gleichmässigen Abständen nebeneinander angeordnet.

Vorzugsweise nimmt in der ersten Ausführungsform der Abstand zwischen der Oberseite des Kottransportbandes bzw. des Trocknungsbandes und den Abgabeelementen quer zur Förderrichtung gesehen mit zunehmendem Abstand von der Mitte des Kottransportbandes bzw. des Trocknungsbandes nach aussen hin ab. Hierdurch kann die Luftverteilung optimiert werden. In der zweiten Ausführungsform ist der Abstand zwischen der Oberseite des Kottransportbandes bzw. des Trocknungsbandes und den Abgabeelementen bei allen Abgabeelementen im Wesentlichen konstant.

Vorzugsweise sind nach der ersten bzw. der zweiten Ausführungsform mehrere Düsen in Richtung des Abgabeelementes, also bevorzugt in Richtung der Förderrichtung und/oder quer zur Förderrichtung, gesehen in einem Abstand von 2 bis 5 Zentimetern zueinander angeordnet.

Vorzugsweise weisen die Düsen nach der ersten bzw. der zweiten Ausführungsform einen Durchmesser von 4 bis 20 Millimetern auf. Die Düse kann auch als Düsenschlitz ausgebildet sein.

Nach einer dritten Ausführungsform ist das mindestens eine Abgabeelement seitlich zum Kottransportband bzw. neben dem Kottransportband angeordnet, wobei die mindestens eine Luftdüse den Kot quer zur Förderrichtung besprüht. Das mindestens eine Abgabeelement liegt in Förderrichtung gesehen neben dem Kottransportband. Diese dritte Ausführungsform hat den Vorteil, dass bezüglich der Ausbildung des Abgabeelementes ein grösserer Bauraum zur Verfügung steht. Ein zusätzlicher Vorteil ist, dass ein verbesserter Luftstrom erreicht werden kann.

Vorzugsweise sind nach der dritten Ausführungsform mehrere Abgabeelemente in Richtung der Förderrichtung hintereinander angeordnet. Hierdurch kann der Wirkbereich bzw. die besagte Teilfläche vergrössert werden.

Vorzugsweise sind die Abgabeelemente beidseitig links und rechts zum Kottransportband angeordnet. Das heisst, mindestens ein Abgabeelement wirkt von links auf das Kottransportband und mindestens ein weiteres Abgabeelement wirkt von rechts auf das Kottransportband.

Besonders bevorzugt sind die Abgabeelemente bezüglich der Förderrichtung alternierend zueinander angeordnet. Das heisst, ein auf der rechten Seite angeordnetes Abgabeelement ist versetzt zu einem auf der linken Seite angeordneten Abgabeelement. Besonders bevorzugt ist die Anordnung so, dass der Luftstrom des einen Abgabeelementes nicht mit dem Luftstrom des anderen Abgabeelementes interferiert. Vorzugsweise sind die Abgabeelemente links und rechts zueinander immer in gleichen Abstand versetzt. Der Zwischenabstand zwischen zwei auf der gleichen Seite liegenden Abgabeelementen entspricht im Wesentlichen der Länge eines Abgabeelementes oder ist leicht grösser oder leicht kleiner. So kann eine flächendeckende Luftbesprühung der besagten Teilfläche erreicht werden.

In einer anderen Variante sind die Abgabeelement gegenüber einander angeordnet.

Vorzugsweise umfassen die Abgabeelemente gemäss der dritten Ausführungsform Luftdüsen in der Gestalt von Schlitzen oder in der Gestalt von in Reihe angeordneten Düsenöffnungen auf, wobei die Luftdüsen in Förderrichtung orientiert sind.

Die Abgabeelemente nach der dritten Ausführungsform umfassen vorzugsweise mindestens einen Ventilator, welcher Umgebungsluft ansaugt und über die Luftdüsen abgibt. Vorzugsweise sind mehrere Ventilatoren pro Abgabeelement angeordnet.

Vorzugsweise ist das mindestens eine Abgabeelement bezüglich des Kottransportbandes bzw. des Trocknungsbandes ortsfest angeordnet, wobei sich das Kottransportband bzw. das Trocknungsband relativ zum feststehenden Abgabeelement bewegt. Die diesbezüglichen Vorteile wurden hierin schon erläutert.

Vorzugsweise weist die Luft Umgebungstemperatur auf. Alternativerweise kann die Luft auch aufgewärmt sein. Hierzu kann beispielsweise ein Wärmetauscher, insbesondere eine Luft-Wärmetauscher eingesetzt werden.

Vorzugsweise ist der Volumenstrom der durch das Abgabeelement abgegebener Luft 100 bis 700 m^3/Stunde pro Quadratmeter Fläche ist.

Vorzugsweise umfasst die Trocknungseinheit ein Sammelrohr, welches mit dem mindestens Abgabeelement nach der ersten bzw. der zweiten Ausführungsform fluidisch in Verbindung steht, wobei das mindestens eine Abgabeelement durch das Sammelrohr mit Luft versorgt wird.

Vorzugsweise steht das Sammelrohr rechtwinklig zu dem mindestens einen Abgabeelement.

Vorzugsweise steht das Sammelrohr in der ersten Ausführungsform am Ende des Kottransportbandes bzw. des Trocknungsbandes quer zur Förderrichtung. In der zweiten Ausführungsform verläuft das Sammelrohr vorzugsweise parallel zur Förderrichtung und ist vorzugsweise neben dem Kottransportband bzw. dem Trocknungsband angeordnet. Vorzugsweise ist im oder am Sammelrohr ein Ventilator angeordnet, mit welchem Luft in das Sammelrohr befördert ist. Der Ventilator ist insbesondere ein Druckventilator. Die Luft kann Stallluft sein oder Stallluft gemischt mit Aussenluft.

Der Querschnitt des Sammelrohrs entspricht im Wesentlichen der Summe aller Querschnitt der Abgabeelemente.

Vorzugsweise liegt der Durchmesser bzw. die Kantenlänge im Falle eines rechteckigen Querschnitts des Sammelrohrs im Bereich von 200 bis 600 Millimetern.

Vorzugsweise weist der besagte Kottransportbandabschnitt bzw. das Trocknungsband in Förderrichtung gesehen eine Länge von 3 Meter bis 6 Meter oder bis 10 Meter auf. Der Kottransportabschnitt bzw. das Trocknungsband kann aber auch länger sein. Je nach Breite der Bänder ist der Wirkbereich demnach vorzugsweise zwischen 3 bis 25.0 m^2.

Erfindungsgemäß ist die Länge des besagten Kottransportbandabschnitts in Förderrichtung gesehen derart gewählt, dass bei einem vollständigen Umlauf des Kottransportbandes innert 24 Stunden bei einer Verweilzeit von 1 bis 6 Stunden jeder Kottransportbandabschnitt einmal unter das mindestens eine Abgabeelement zu liegen kommt. Die Verweilzeit kann auch im Bereich von 1 bis 4 Stunden liegen.

Vorzugsweise ist die besagte Förderlänge des Kottransportbandes maximal 140 Meter oder maximal 100 Meter, insbesondere maximal 70 Meter. Bei längeren Anlagen ist es denkbar zwei oder mehrere Kottrocknungseinrichtungen hintereinander anzuordnen.

Vorzugsweise ist die Förderlänge ein ganzzahliges Vielfaches der Teillänge.

Vorzugsweise umfasst die Kottrocknungseinrichtung weiter eine Messvorrichtung zur Bestimmung des Trocknungsgrades des Kots, wobei die Messvorrichtung im Wirkbereich des Abgabeelements angeordnet ist. Die Messvorrichtung hat den Vorteil, dass das Kottransportband nach Erreichen eines gewünschten Trocknungsgrads

In einer besonders bevorzugten Variante sind mehrere Kottransportbänder bzw. Trocknungsbänder mit zugehörigen Abgabeelementen übereinander angeordnet sind.

Vorzugsweise ist in Einbaulage oberhalb des Kottransportbandes ein Gitterboden oder ein geschlossener Boden angeordnet.

Vorzugsweise ist das mindestens eine Abgabeelement oberhalb des Kottransportbandes bzw. des Trocknungsbandes angeordnet.

Vorzugsweise umfasst die Kottrocknungseinrichtung weiterhin einen Controller, mit welchem das Kottransportband derart ansteuerbar ist, dass das Kottransportband bzw. das Trocknungsband jeweils um eine Vorschublänge, die einem Bruchteil der gesamten Förderlänge entspricht, taktweise verfahrbar ist.

Vorzugsweise entspricht die besagte Vorschublänge eines Taktes im Wesentlichen der Länge des besagten Kottransportbandabschnitts in Förderrichtung gesehen. Das heisst, dass pro Takt jeweils ein Kottransportbandabschnitt des Kottransportbands in den Wirkbereich vorgeschoben wird und dass anschliessend ein nachfolgender Kottransportbandabschnitt des Kottransportbands in den Wirkbereich vorgeschoben wird.

Eine Stalleinrichtung umfasst eine Kottrocknungseinrichtung nach obiger Beschreibung und weiterhin eine in Förderrichtung gesehen nach der Kottrocknungseinrichtung angeordnete Pelletiervorrichtung, mit welcher der getrocknete Kot in Pellets pressbar ist Ein Verfahren zum Betrieb einer Kottrocknungseinrichtung nach obiger Beschreibung ist dadurch gekennzeichnet, dass das Kottransportband mit dem darauf liegenden Kot taktweise um den besagten Kottransportbandabschnitt bewegt wird, so dass in den Wirkbereich des besagten Abgabeelementes ein erster Kottransportbandabschnitt mit zu trocknendem Kot zu liegen kommt, wobei nach einer bestimmten Verweildauer, das Kottransportband um den besagten Kottransportbandabschnitt in Förderrichtung weiter bewegt wird, so dass in den Wirkbereich des besagten Abgabeelementes ein zweiter Kottransportbandabschnitt mit zu trocknendem Kot zu liegen kommt, wobei der getrocknete Kot des ersten Kottransportbandabschnitt vom Kottransportband abgeworfen wird.

Ein Verfahren zum Betrieb einer Kottrocknungseinrichtung nach obiger Beschreibung mit dem separaten Trocknungsband ist dadurch gekennzeichnet, dass das Kottransportband mit dem darauf liegenden Kot taktweise um den besagten Kottransportbandabschnitt bewegt wird, so dass der Kot auf das separate Trocknungsband bewegt wird, derart, dass der zu trocknende Kot in den Wirkbereich des besagten Abgabeelementes zu liegen kommt, wobei nach einer bestimmten Verweildauer, das Trocknungsband um den besagten Kottransportbandabschnitt in Förderrichtung weiter bewegt wird, so dass in den Wirkbereich des besagten Abgabeelementes Kot eines zweiten Kottransportbandabschnittes zu liegen kommt, wobei der getrocknete Kot des ersten Kottransportbandabschnitt vom Trocknungsband abgeworfen wird.

Die besagte Verweildauer ist vorzugsweise im Bereich von 1 bis 6 Stunden, insbesondere im Bereich von 1 bis 4 Stunden.

Das Verfahren wir vorzugsweise über einen Zeitraum von 24 Stunden ausgeübt.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Frontansicht einer Kottrocknungseinrichtung nach einer ersten Ausführungsform der vorliegenden Erfindung;
- Fig. 2: eine Seitenansicht der Kottrocknungseinrichtung nach Figur 1;
- Fig. 3: eine perspektivische Ansicht der Kottrocknungseinrichtung nach Figur 1;
- Fig. 4: eine Draufsicht auf eine Anordnung gemäss einer ersten Variante einer Kottrocknungseinrichtung nach den vorhergehenden Figuren in einem Stall;
- Fig. 5: eine Draufsicht auf eine Anordnung gemäss einer zweiten Variante einer Kottrocknungseinrichtung nach den vorhergehenden Figuren in einem Stall;
- Fig. 6: eine Frontansicht einer Kottrocknungseinrichtung nach einer zweiten Ausfuhrungsform der vorliegenden Erfindung;
- Fig. 7: eine Seitenansicht der Kottrocknungseinrichtung nach Figur 6;
- Fig. 8: eine perspektivische Ansicht der Kottrocknungseinrichtung nach Figur 6;
- Fig. 9: eine weitere perspektivische Ansicht der Kottrocknungseinrichtung nach Figur 6;
- Fig. 10: eine Draufsicht auf eine Anordnung gemäss einer ersten Variante einer Kottrocknungseinrichtung nach den vorhergehenden Figuren 6 bis 9 in einem Stall;
- Fig. 11: eine perspektivische Ansicht einer Kottrocknungseinrichtung nach einer dritten Ausführungsform der vorliegenden Erfindung;
- Fig. 12: eine perspektivische Detailansicht der Figur 11;
- Fig. 13: eine Frontansicht der dritten Ausführungsform nach den Figuren 11 bis 12;
- Fig. 14: eine Seitenansicht der dritten Ausführungsform nach den Figuren 11 bis 13; und
- Fig. 15: eine Draufsicht der dritten Ausführungsform nach den Figuren 11 bis 13.

### BESCHREIBUNG BEVORZUGTER AUSFÜHRUNGSFORMEN

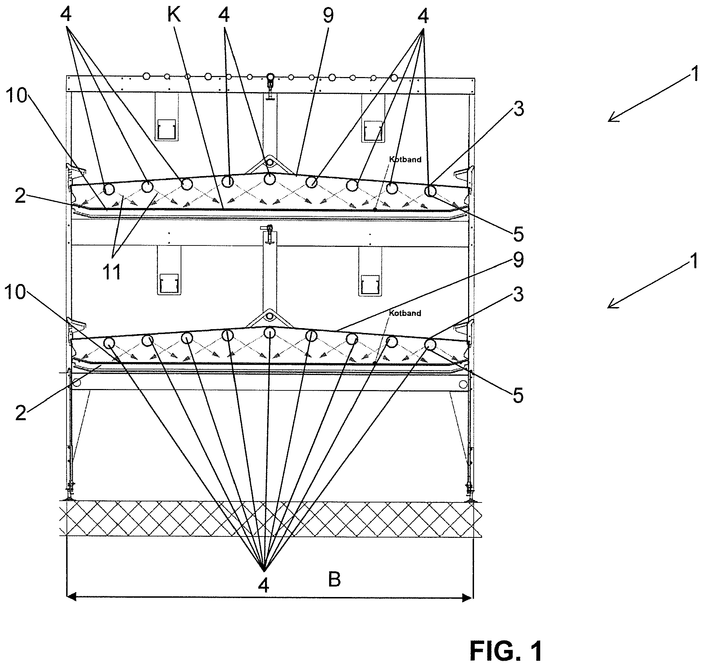

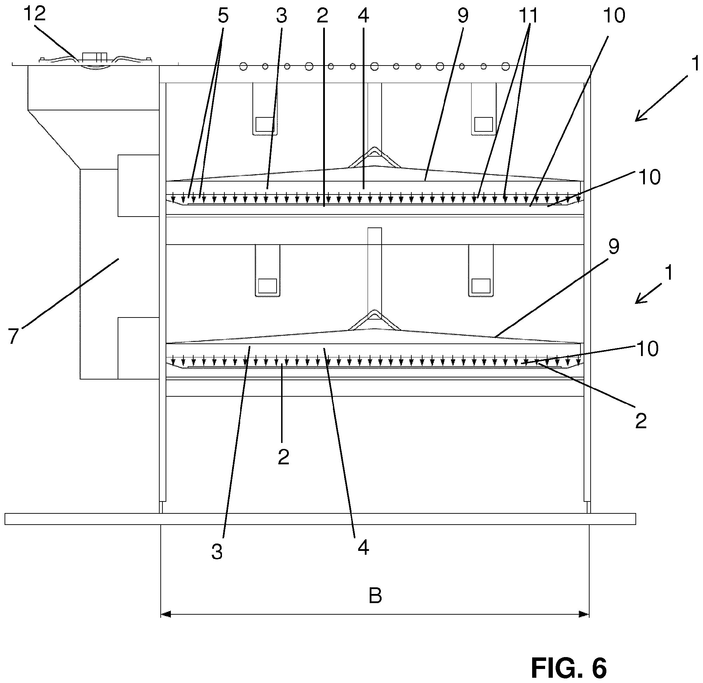

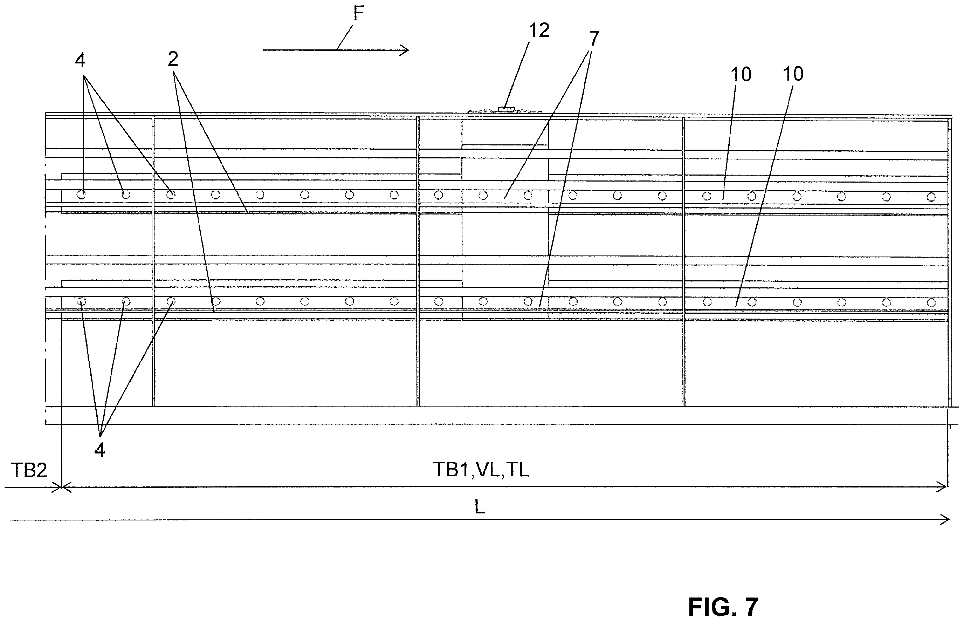

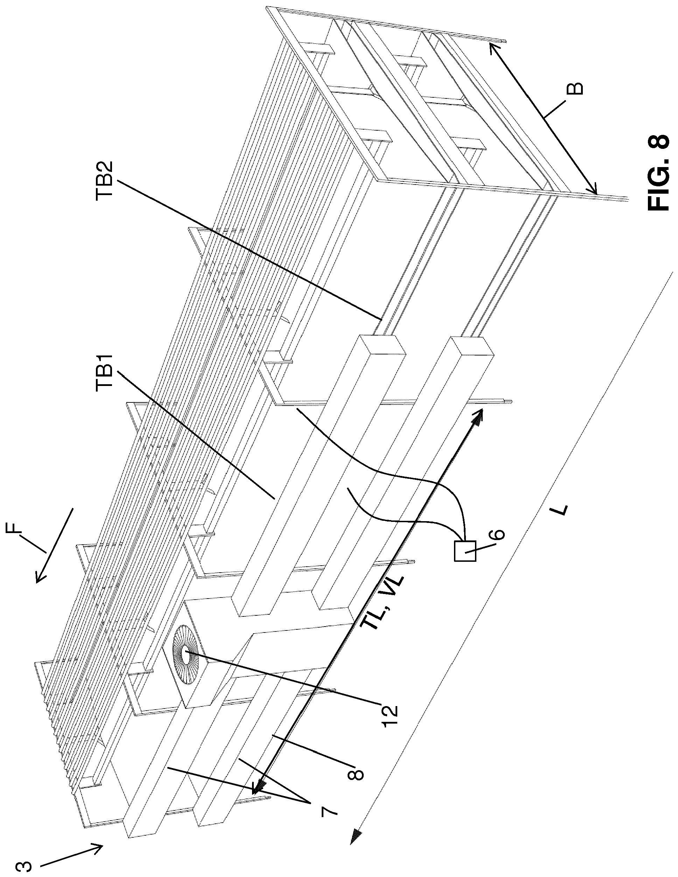

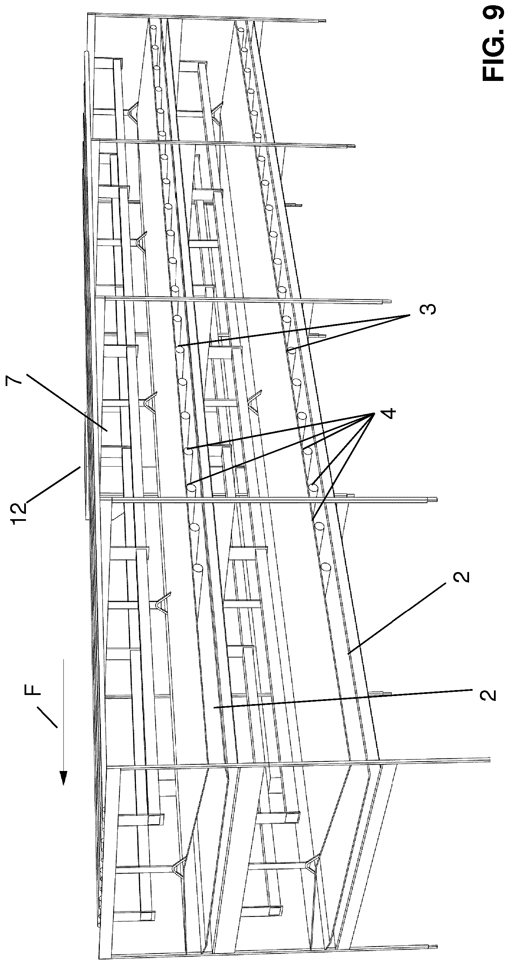

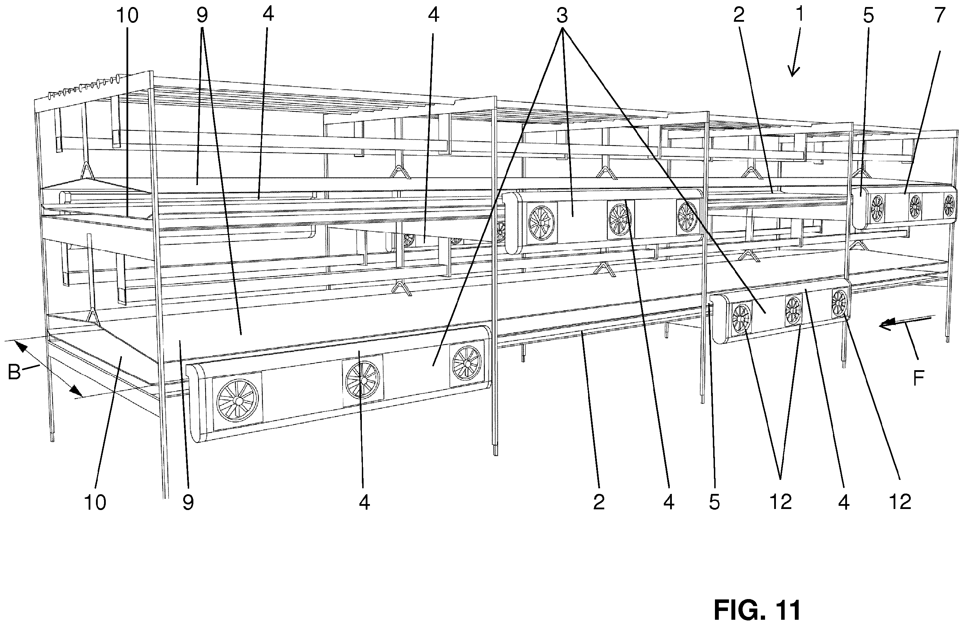

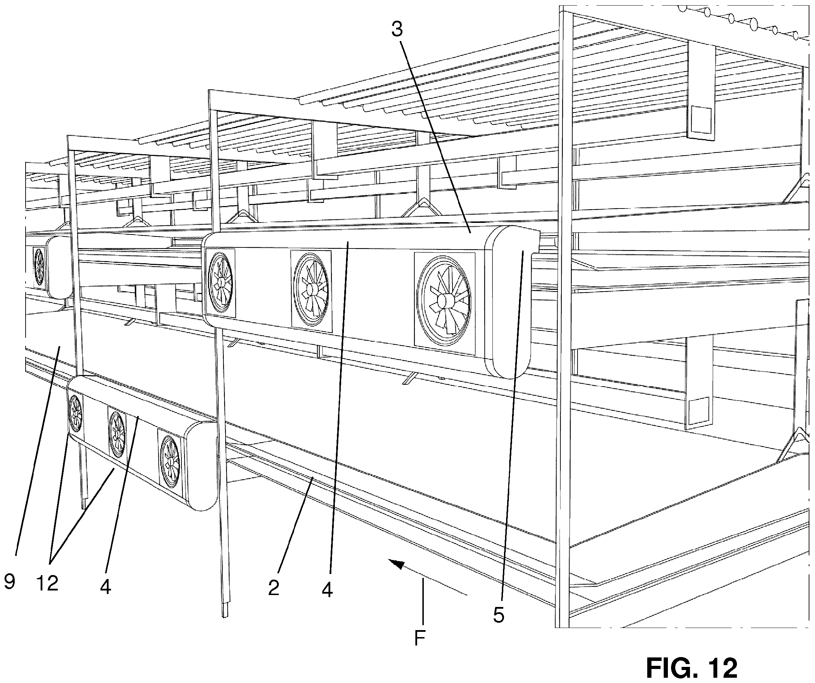

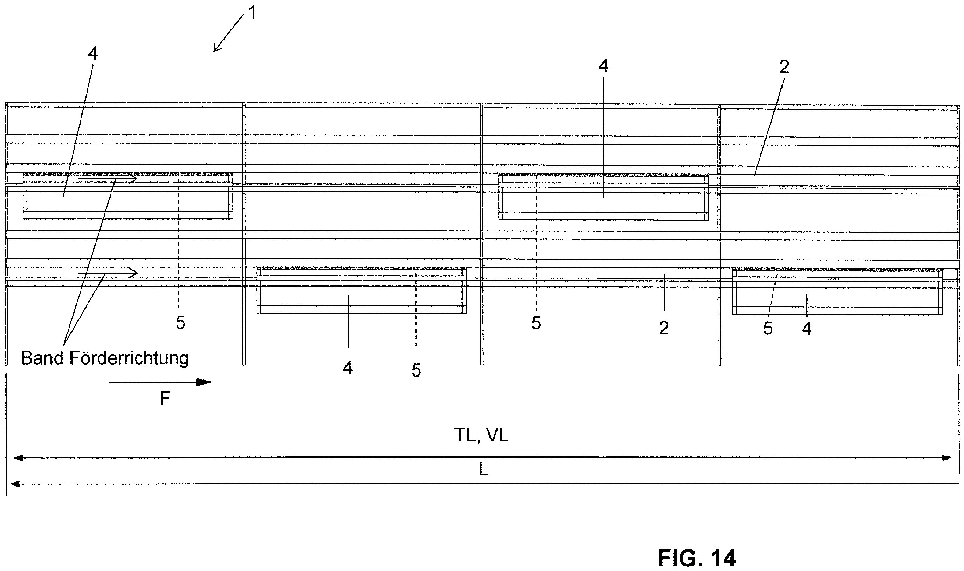

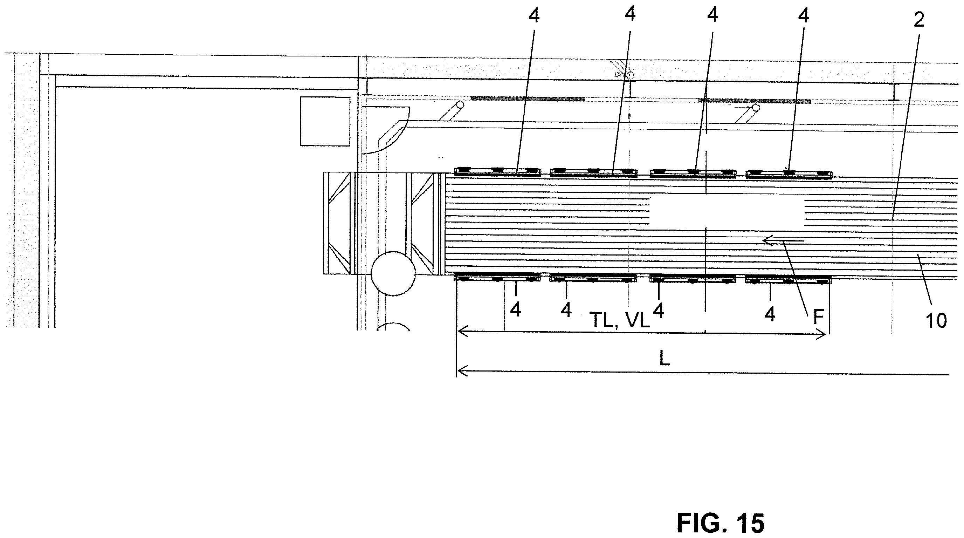

In den Figuren 1 bis 15 werden verschiedene Ansichten einer Kottrocknungseinrichtung 1 für Tierställe, insbesondere für Geflügelställe, gezeigt. Die Figuren 1 bis 5 zeigen dabei Ansichten einer ersten Ausführungsform, die Figuren 6 bis 10 zeigen Figuren einer zweiten Ausführungsform und die Figuren 11 bis 15 zeigen Figuren einer dritten Ausführungsform. Gleiche Teile sind dabei mit gleichen Bezugszeichen versehen.

Die Kottrocknungseinrichtung 1 umfasst ein Kottransportband 2 zur Beförderung des Kots K entlang einer Förderrichtung F und eine Trocknungseinheit 3 zur Besprühung des auf dem Kottransportband 2 liegenden Kots K mit Luft zum Trocknen des Kots K.

Das Kottransportband 2 erstreckt sich über eine Förderlänge L und weist eine Oberseite 10 zur Aufnahme des Kots K auf. Die Trocknungseinheit 3 umfasst mindestens ein Abgabeelement 4, das mindestens eine Luftdüse 5 zur Besprühung des auf dem Kottransportband 2 liegenden Kots K mit Luft aufweist.

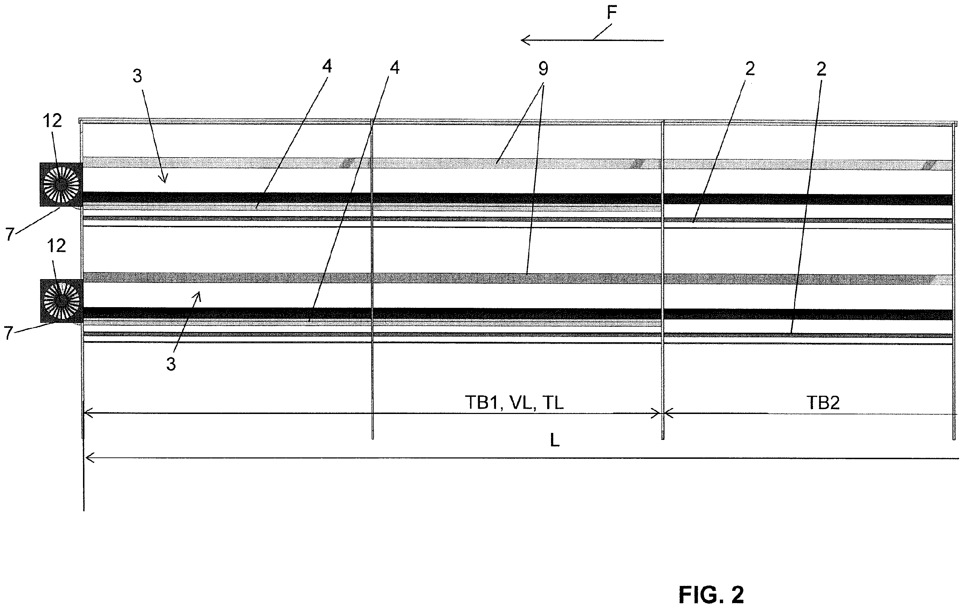

Die Oberseite 10 zur Aufnahme des Kots K des Kottransportbandes 2 ist in Förderrichtung F in mehrere hintereinander liegende Kottransportbandabschnitte TB1, TB2 aufgeteilt. Das mindestens eine Abgabeelement 4 ist dabei derart angeordnet, dass dieses lediglich einer der besagten Kottransportbandabschnitte TB1, TB2 mit Luft besprüht. In der Figur 2 und 3 bzw. 7 bis 9 bzw. 11 bis 15 sind die entsprechenden Kottransportbandabschnitte TB1, TB2 eingezeichnet. Dem ersten Kottransportbandabschnitt TB1 schliesst sich entgegen der Förderrichtung F der zweite Kottransportbandabschnitt TB2 an. In der in den Figuren gezeigten Ausführungsform befindet sich nun der erste Kottransportbandabschnitt TB1 im Wirkbereich der Trocknungseinheit 3 bzw. der Abgabeelemente 4. Der zweite Kottransportbandabschnitt TB2 liegt ausserhalb des besagten Wirkbereichs. Folglich wird die Luft ausschliesslich auf den ersten Kottransportbandabschnitt TB1 aufgebracht, nicht aber auf den zweiten Kottransportbandabschnitt TB2.

Mit anderen Worten nimmt jeder der Kottransportbandabschnitte eine Teilfläche der gesamten Oberseite des Kottransportbandes ein und das mindestens eine Abgabeelement ist derart angeordnet, dass dieses auf einen Wirkbereich einwirkt, welcher flächenmässig der besagten Teilfläche entspricht.

In den gezeigten Ausführungsformen ist die Trocknungseinheit dem Kottransportband angeordnet und wirkt so direkt auf die Oberseite des Kottransportbandes 2 ein. In der ersten und der zweiten Ausführungsform liegt die Trocknungseinheit bzw. die Abgabeelemente 4 direkt über dem ersten Kottransportabschnitt TB1 während in der dritten Ausführungsform die Trocknungseinheit bzw. die Abgabeelemente 4 seitlich zum Kottransportabschnitt TB1 angeordnet sind. In einer nicht gezeigten Ausführungsform ist die Trocknungseinheit über einem separat zum besagten Kottransportband ausgebildeten Trocknungsband angeordnet, wobei das Trocknungsband vorzugsweise eine Länge aufweist, welche dem besagten Kottransportbandabschnitt entspricht. Die hierin gemachten Ausführungen gelten für beide Varianten sinngemäss.

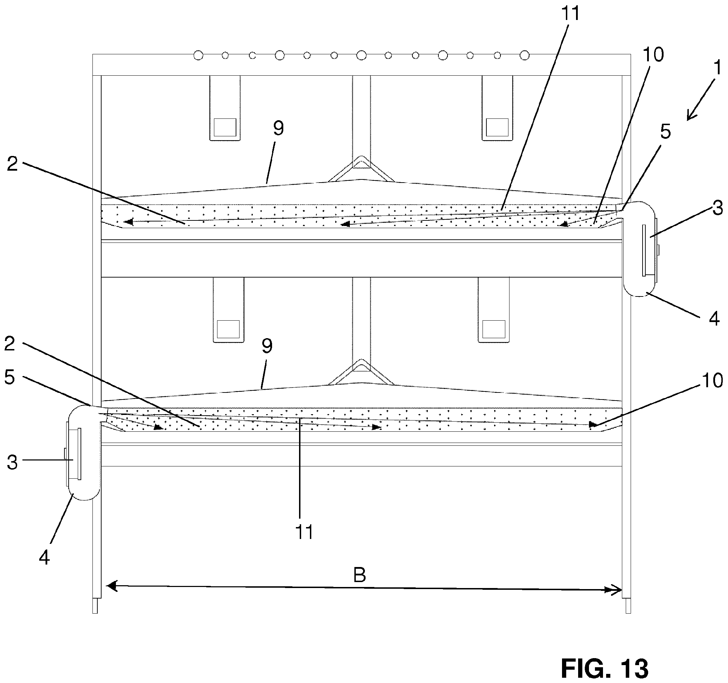

In der gezeigten ersten und zweiten Ausführungsform sind mehrere Abgabeelemente 4 parallel nebeneinander angeordnet und besprühen so die gesamte Breite des Kottransportbandabschnittes TB1. Dies wird insbesondere in den Figuren 1 und 6 ersichtlich. Die Pfeile mit den Bezugszeichen 11 symbolisieren dabei die Luftströme. Der Luftstrom 11 erstreckt sich vom Abgabeelement 4 auf die Oberseite 10 des Kottransportbandes 2. In der dritten Ausführungsform sind mehrere Abgabeelemente 4 seitlich neben dem Kottransportband 2 angeordnet und sprühen die Luft seitlich auf die Oberseite 10 des Kottransportbandes 2, was in der Figur 13 gezeigt wird.

Das Abgabeelement 4 ist in allen drei gezeigten Ausführungsformen bezüglich des Kottransportbandes 2 ortsfest angeordnet. Das heisst, das Abgabeelement 4 bewegt sich nicht bezüglich des Kottransportbandes 2. Das Kottransportband 2 bewegt sich aber relativ zum feststehenden Abgabeelement 4.

In der gezeigten ersten Ausführungsform nach den Figuren 1 bis 5 ist das mindestens eine Abgabeelement 4 im Bereich des Endes 8 des Kottransportbandes 2 angeordnet. Das Ende 8 definiert den Bereich, in welchem der getrocknete Kot vom Kottransportband 2 weggeführt wird. Die Abgabeelemente 4 erstrecken sich dabei vom Ende 8 des Kottransportbandes 2 gegen die Förderrichtung F über die Oberseite 10 des Kottransportbandes 2.

Das mindestens eine Abgabeelement 4 erstreckt sich in der gezeigten Ausführungsform zur Förderrichtung F und liegt beabstandet zur Oberseite 10 des Kottransportbandes 2.

In den Figuren 6 bis 10 wird die zweite Ausführungsform der vorliegenden Erfindung gezeigt. Gleiche Teile sind mit gleichen Bezugszeichen versehen und es wird auf die obige Beschreibung im Zusammenhang mit der ersten Ausführungsform verwiesen. Der Hauptunterschied zur ersten Ausführungsform liegt darin, dass bei der zweiten Ausführungsform die Abgabeelemente 2 nicht in Förderrichtung des Kottransportbandes 2 orientiert ist, sondern quer dazu. Das Sammelrohr 7 liegt seitlich zum Kottransportband 2 und die Abgabeelemente 4 erstrecken sich im Wesentlichen rechtwinklig zum Sammelrohr 7.

In den Figuren 11 bis 15 wird die dritte Ausführungsform der vorliegenden Erfindung gezeigt. Gleiche Teile sind mit gleichen Bezugszeichen versehen und es wird auf die obige Beschreibung im Zusammenhang mit der ersten Ausführungsform verwiesen. Hier sind mehrere Abgabeelemente 4 seitlich zum Kottransportband 2 angeordnet. Von der Figur 11 kann gut erkannt werden, dass die Abgabeelemente 4 alternierend links und rechts von Kottransportband 2 angeordnet sind. Das heisst, ein auf der rechten Seite angeordnetes Abgabeelement 4 wird in Förderrichtung F gesehen von einem auf der linken Seite angeordneten Abgabeelement 4 gefolgt und so weiter.

Jedes der Abgabeelemente nach der dritten Ausführungsform umfasst mindestens einen Ventilator, mit welchem das Abgabeelemente 4 Luft aus der Umgebung für die Luftdüsen 5 an den Abgabeelemente 4 ansaugen kann. Die Luftdüse ist vorzugsweise ein Spalt, welcher sich in Förderrichtung F gesehen im Wesentlichen über die gesamte Länge des jeweiligen Abgabeelementes erstreckt. Die Luftdüsen 5 sind dabei derart ausgebildet, dass diese auf die Oberseite 10 des jeweiligen Kottransportbandes 2 einen Luftstrom bewirken, so dass der Kot K entsprechend getrocknet werden kann.

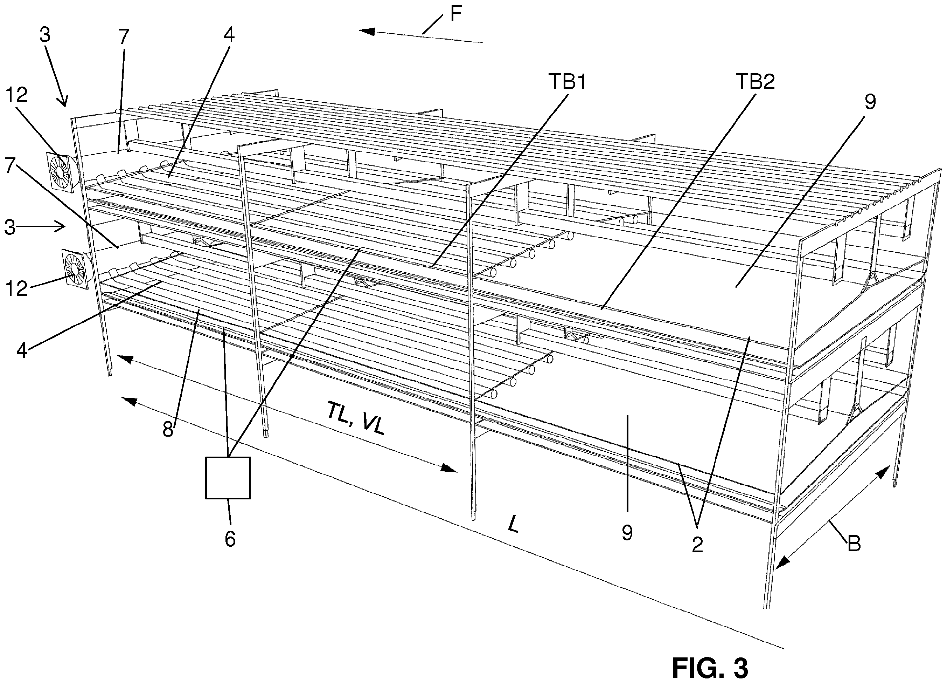

Die Kottrocknungseinrichtung 1 nach allen Ausführungsformen umfasst weiterhin einen Controller 6, welcher in der Figur 3 symbolisch dargestellt ist. Mit dem Controller 6 ist das Kottransportband 2 derart ansteuerbar, dass das Kottransportband 2 jeweils um eine Vorschublänge VL, die einen Bruchteil der gesamten Förderlänge L entspricht, taktweise verfahrbar ist. Das heisst, das Kottransportband 2 kann jeweils um die Vorschublänge VL verfahren werden. Die Vorschublänge VL entspricht vorzugsweise der Länge in Förderrichtung F gesehen des Kottransportbandesabschnittes TB1, TB2.

Besonders bevorzugt handelt es sich beim Abgabeelement 4 in der ersten und der zweiten Ausführungsformen um ein Rohr, welches entsprechend über dem Kottransportband 2 liegt. Das Rohr kann einen runden oder einen eckigen Querschnitt aufweisen.

In den gezeigten ersten und zweiten Ausführungsformen ist eine Vielzahl von Abgabeelementen 4 angeordnet. Die Abgabeelemente 4 verlaufen dabei parallel zueinander und parallel oder quer zur Förderrichtung F. Die Abgabeelemente 4 sind in gleichmässigen Abständen zueinander angeordnet.

In der gezeigten ersten Ausführungsform nach den Figuren 1 bis 5 ist ein Abgabeelement 4 mittig im Förderband angeordnet und die weiteren Abgabeelemente 4 liegen links beziehungsweise rechts zum mittig liegenden Abgabeelement 4. In der gezeigten Ausführungsform liegen die Abgabeelemente 4 bezüglich der Oberseite 10 des Kottransportbandes 2 derart zueinander, dass die Distanz zwischen der Oberseite 10 des Kottransportbandes 2 und den Abgabeelementen 4 zur Förderrichtung F gesehen mit zunehmenden Abstand von der Mitte des Kottransportbandes nach aussen hin abnimmt.

In der gezeigten zweiten Ausführungsform nach den Figuren 6 bis 10 liegen die Abgabeelemente 4 in konstantem Abstand zur Oberseite 10 des Kottransportbandes 2.

Jedes Abgabeelement 4 umfasst mehrere Düsen 5, die in Richtung der Förderrichtung F gesehen in einem Abstand von jeweils 2-5cm zueinander angeordnet sind. Der Durchmesser der Düsen liegt vorzugsweise im Bereich von 4-20mm. Die Düsen 5 sind dabei derart ausgebildet, dass diese auf die Oberseite 10 des jeweiligen Kottransportbandes 2 einen Luftstrom bewirken, so dass der Kot K entsprechend getrocknet werden kann.

In der gezeigten ersten und zweiten Ausführungsform stehen die Abgabeelemente 4 fluidisch mit einem Sammelrohr 7 in Verbindung. Über das Sammelrohr 7 können die Abgabeelemente 4 mit Luft versorgt werden. Anstelle der Ventilatoren in der dritten Ausführungsform könnte auch ein Sammelrohr vorgesehen sein.

Das Sammelrohr 7 ist in der ersten Ausführungsform nach den Figuren 1 bis 5 quer zur Förderrichtung des Kottransportbandes 2 orientiert. Das Sammelrohr 7 ist dabei im Endbereich des Kottransportbandes 2 angeordnet. In der zweiten Ausführungsform nach den Figuren 6 bis 10 ist das Sammelrohr 7 seitlich zum Kottransportband 2 angeordnet.

Dem Sammelrohr 7 vorgeschaltet ist in der gezeigten Ausfiihrungsform ein Ventilator 12, welcher Luft ansaugt und diese dann über das Sammelrohr 7 den Abgabeelementen 4 zuleitet.

Jeder Kottransportbandabschnitt TB weist in allen hierin beschriebenen Ausführungsformen in Förderrichtung F gesehen vorzugsweise eine Länge TL in Bereich von 3 bis 6 Metern auf. Die Länge TL des besagten Kottransportabschnittes TB ist in Förderrichtung F erfindungsgemäß derart gewählt, dass bei einem vollständigen Umlauf des Transportbandes 2 innert 24 Stunden bei einer Verweilzeit von 1 bis 6 Stunden jeder Kottransportbandabschnitt ein einziges mal unter das mindestens eine Abgabeelement 4 zu liegen kommt.

Die maximale Förderlänge L ist vorzugsweise 100 Meter, insbesondere maximal 70 Meter.

Weiter umfasst die Kottrocknungseinrichtung 1 in den gezeigten Ausführungsformen einen Gitterboden 9, auf welchem sich die Tiere bewegen können. In der gezeigten Ausführungsform ist jeweils in Einbaulage oberhalb des Abgabeelementes 4 der entsprechende Gitterboden 9 angeordnet. Anstelle eines Gitterbodens kann auch eine vollflächige Struktur angeordnet werden.

Von den Figuren 1 bis 3 und 6 bis 9 und 11 bis 15 kann erkannt werden, dass hier zwei Kottrocknungseinrichtungen 1 übereinander angeordnet sind. Damit kann der Platz für die Tiere entsprechend optimiert werden.

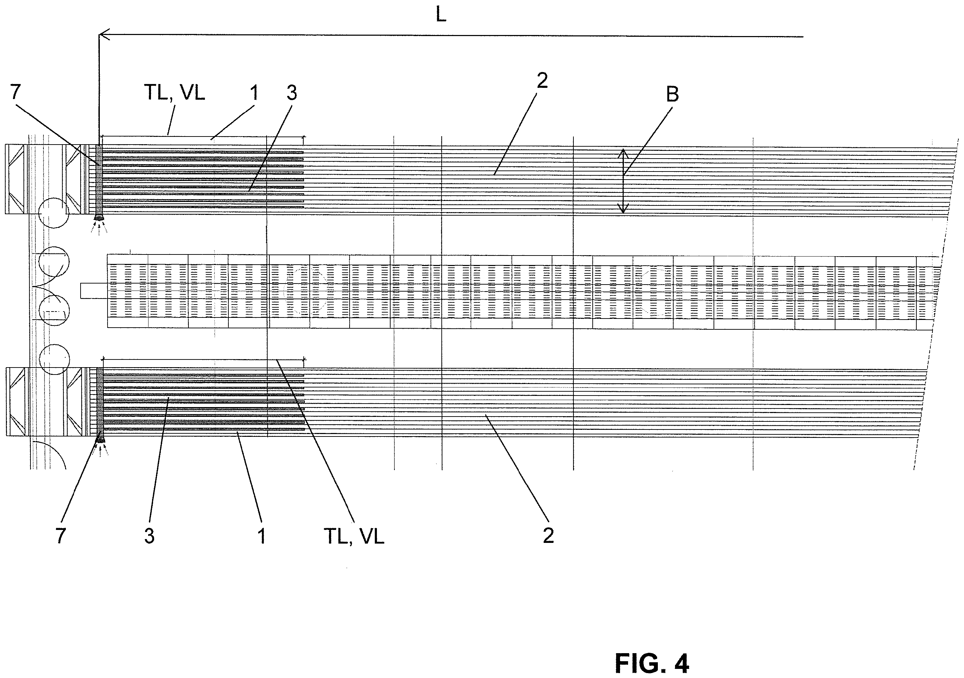

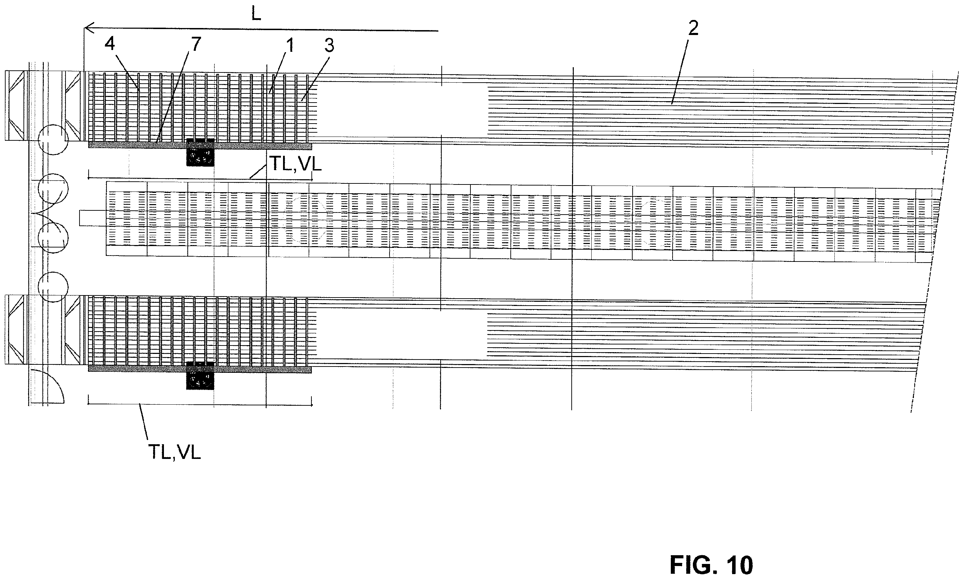

In den Figuren 4 und 10 wird eine parallele Anordnung von zwei Kottrocknungseinrichtungen 1 nebeneinander gezeigt. Hier kann gut erkannt werden, dass sich die Abgabeelemente 4 derart angeordnet sind, dass diese lediglich einen Kottransportbandabschnitt, also einen Teilbereich des Kottransportbandes 2, überdecken.

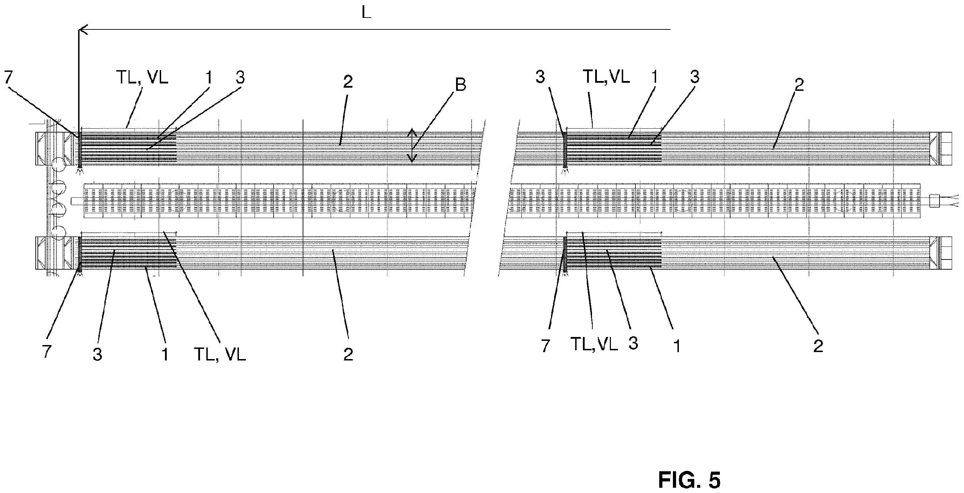

In der Figur 5 wird sodann eine doppelte Anordnung von zwei Kottrocknungseinrichtungen 1 hintereinander und nebeneinander gezeigt. Über eine derartige Konfiguration kann ein besonders langer Stall mit der entsprechenden Kottrocknungseinrichtung 1 versorgt werden. In der Figur 5 wird die Anordnung nach der ersten Ausführungsform dargestellt. Die gleiche Konfiguration ist auch nach der zweiten Ausführungsform möglich.

Ein Verfahren zum Betrieb einer Kottrocknungseinrichtung nach obiger Beschreibung ist, dadurch charakterisiert, dass das Kottransportband 2 mit dem darauf liegenden Kot K taktweise um den besagten Kottransportbandabschnitt TB bewegt wird, so dass in den Wirkbereich des besagten Abgabeelementes 4 ein erster Kottransportbandabschnitt TB1 mit zu trocknendem Kot K zu liegen kommt, wobei nach einer bestimmten Verweildauer, das Kottransportband 2 um den besagten Kottransportbandabschnitt TB in Förderrichtung F)weiter bewegt wird, so dass in den Wirkbereich des besagten Abgabeelementes 4 ein zweiter Kottransportbandabschnitt TB2 mit zu trocknendem Kot zu liegen kommt, wobei der getrocknete Kot K des ersten Kottransportbandabschnitt TB2 vom Kottransportband 2 abgeworfen wird.

Die Verweildauer ist im Bereich von 1 bis 6 Stunden, insbesondere im Bereich von 1 bis 4 Stunden: Vorzugsweise wird das Verfahren über einen Zeitraum von 24 Stunden ausgeübt.

### BEZUGSZEICHENLISTE

- 1: Kottrocknungseinrichtung
- 2: Kottransportband
- 3: Trocknungseinheit
- 4: Abgabeelement
- 5: Luftdüse
- 6: Controller
- 7: Sammelrohr
- 8: Ende
- 9: Gitterboden
- 10: Oberseite
- 11: Luft
- 12: Ventilator

- TB: Kottransportbandabschnitt
- B: Breite
- F: Förderrichtung
- L: Förderlänge
- TL: Teillänge
- VL: Vorschublänge

## Patentansprüche

1. Kottrocknungseinrichtung (1) für Tierställe, wie Geflügelställe, umfassend
ein Kottransportband (2) zur Förderung des Kots entlang einer Förderrichtung (F), wobei sich das Kottransportband (2) über eine Förderlänge (L) erstreckt und eine Oberseite (10) zur Aufnahme des Kots (K) aufweist, und
eine Trocknungseinheit (3) mit mindestens einem Abgabeelement (4), das mindestens eine Luftdüse (5) oder eine Vielzahl von Luftdüsen (5) zur Besprühung des auf dem Kottransportband (2) liegenden Kots (K) mit Luft zur Trocknung des Kots (K) aufweist,
wobei die Oberseite (10) zur Aufnahme des Kots (K) des Kottransportbandes (2) in mehrere in Förderrichtung (F) hintereinander liegende Kottransportbandabschnitte (TB1, TB2) aufgeteilt ist, wobei jeder Kottransportbandabschnitte (TB1, TB2) eine Teilfläche der gesamten Oberseite (10) einnimmt; und wobei das mindestens eine Abgabeelement (4) derart angeordnet ist, dass dieses auf einen Wirkbereich einwirkt, welcher flächenmässig der besagten Teilfläche entspricht, **dadurch gekennzeichnet,**
**dass** die Länge (TL) des besagten Kottransportbandabschnitts (TB1, TB2) in Förderrichtung (F) gesehen derart gewählt ist, dass bei einem vollständigen Umlauf des Kottransportbandes innert 24 Stunden bei einer Verweilzeit von 1 bis 6 Stunden jeder Kottransportbandabschnitt einmal unter das mindestens eine Abgabeelement (4) zu liegen kommt.

2. Kottrocknungseinrichtung (1) nach Anspruch 1, **dadurch gekennzeichnet, dass** sich der Kottransportbandabschnitt (TB1, TB2) bzw. die Teilfläche über die gesamte Breite und über eine Teillänge (TL) des Kottransportbands erstreckt.

3. Kottrocknungseinrichtung (1) nach Anspruch 1 oder 2, **dadurch gekennzeichnet, dass** das mindestens eine Abgabeelement (4) derart angeordnet ist, dass die gesamte Breite (B) des Kottransportbandes (2) bzw. des Trocknungsbandes mit Luft besprühbar ist bzw. dass das mindestens eine Abgabeelement (4) sich innerhalb des Kottransportbandabschnittes (TB1, TB2) erstreckt und insbesondere derart angeordnet ist, dass die gesamte Breite (B) des Kottransportbandes (2) bzw. des Trocknungsbandes mit Luft besprühbar ist.

4. Kottrocknungseinrichtung (1) nach einem der vorhergehenden Ansprüche, **dadurch gekennzeichnet, dass** das Abgabeelement (4) bezüglich des Kottransportbandes (2) bzw. des Trocknungsbandes ortsfest angeordnet ist, wobei sich das Kottransportband (2) bzw. das Trocknungsband relativ zum feststehenden Abgabeelement (4) bewegt; und/oder dass das Abgabeelement im Endbereich des Kottransportbandes (2) angeordnet ist; und/oder dass das mindestens eine Abgabeelement (4) sich vom Ende (8) des Kottransportband (2) bzw. des Trocknungsbandes gegen die Förderrichtung (F) erstreckt; und/oder dass das mindestens eine Abgabeelement (4) sich von einer oder beiden Seiten des Kottransportbandes bzw. des Trocknungsbandes quer zur Förderrichtung erstreckt.

5. Kottrocknungseinrichtung (1) nach einem der vorhergehenden Ansprüche, **dadurch gekennzeichnet, dass** sich das mindestens eine Abgabeelement (4) parallel zur und/oder quer Förderrichtung (F) beabstandet zur Oberseite (10) des Kottransportbandes (2) bzw. das Trocknungsband erstreckt; und/oder dass das mindestens eine Abgabeelement (4) die Gestalt eines Rohrs aufweist.

6. Kottrocknungseinrichtung (1) nach einem der vorhergehenden Ansprüche, **dadurch gekennzeichnet, dass** eine Vielzahl von Abgabeelementen (4) angeordnet sind,
wobei die Abgabeelemente (4) vorzugweise parallel zueinander und parallel zur Förderrichtung verlaufen; und/oder
wobei die Abgabeelemente (4) vorzugweise parallel zueinander und quer zur Förderrichtung verlaufen;
wobei die Abgabeelemente (4) in gleichmässigen Abständen zueinander, vorzugsweise von der Mitte des Kottransportbandes (2) bzw. des Trocknungsbandes ausgehend, nebeneinander angeordnet sind; und/oder
wobei der Abstand zwischen der Oberseite (10) des Kottransportbandes (2) bzw. des Trocknungsbandes und den Abgabeelementen (4) quer zur Förderrichtung (F) gesehen mit zunehmendem Abstand von der Mitte des Kottransportbandes (2) bzw. des Trocknungsbandes nach aussen hin abnimmt.

7. Kottrocknungseinrichtung (1) nach einem der vorhergehenden Ansprüche, **dadurch gekennzeichnet, dass** mehrere Düsen (5) in Richtung der Förderrichtung gesehen und/oder quer zur Förderrichtung in einem Abstand von 2 bis 5 Zentimetern zueinander angeordnet sind; und/oder dass die Düsen einen Durchmesser von 4 bis 20 Millimetern aufweisen; und/oder dass die Düse ein Düsenschlitz ist.

8. Kottrocknungseinrichtung (1) nach einem der vorhergehenden Ansprüche 1 bis 3, **dadurch gekennzeichnet, dass** das mindestens eine Abgabeelement (4) seitlich zum Kottransportband (2) bzw. neben dem Kottransportband (2) angeordnet ist, wobei die mindestens eine Luftdüse (5) den Kot (K) quer zur Förderrichtung (F) besprüht.

9. Kottrocknungseinrichtung (1) nach Anspruch 8, **dadurch gekennzeichnet, dass** mehrere Abgabeelemente (4) in Richtung der Förderrichtung (F) hintereinander angeordnet sind; und/oder
dass die Abgabeelemente (4) beidseitig links und rechts zum Kottransportband (2) angeordnet sind, wobei die Abgabeelemente (4) bezüglich der Förderrichtung (F) alternierend zueinander oder gegenüber einander angeordnet sind und/oder dass die Abgabeelemente (4) Luftdüsen (5) in der Gestalt von Schlitzen oder in der Gestalt von in Reihe angeordneten Düsenöffnungen aufweisen, wobei die Luftdüsen in Förderrichtung (F) orientiert sind; und/oder
dass die Abgabeelemente (4) mindestens einen Ventilator umfassen, welcher Umgebungsluft ansaugt und über die Luftdüsen (5) abgibt; und/oder dass das mindestens eine Abgabeelemente (4) bezüglich des Kottransportbandes (2) bzw. des Trocknungsbandes ortsfest angeordnet ist, wobei sich das Kottransportband (2) bzw. das Trocknungsband relativ zum feststehenden Abgabeelement (4) bewegt.

10. Kottrocknungseinrichtung (1) nach einem der vorhergehenden Ansprüche, **dadurch gekennzeichnet, dass** die Trocknungseinheit (3) ein Sammelrohr (7) umfasst, welches mit dem mindestens Abgabeelement (4) fluidisch in Verbindung steht, wobei das mindestens eine Abgabeelement (4) durch das Sammelrohr (7) mit Luft versorgt wird.

11. Kottrocknungseinrichtung (1) nach einem der vorhergehenden Ansprüche, **dadurch gekennzeichnet,**
**dass** der besagte Kottransportbandabschnitt (TB) bzw. das Trocknungsband in Förderrichtung (F) gesehen eine Länge (TL) von 3 Meter bis 6 Meter oder bis 10 Meter aufweist; und/oder
**dass** die besagte Förderlänge (L) maximal 140 Meter, bevorzugt maximal 100 Meter, insbesondere maximal 70 Meter ist; und/oder
**dass** die Kottrocknungseinrichtung (1) weiter eine Messvorrichtung zur Bestimmung des Trocknungsgrades des Kots umfasst, wobei die Messvorrichtung im Wirkbereich des Abgabeelements (4) angeordnet ist; und/oder
**dass** mehrere Kottransportbänder (2) bzw. bzw. Trocknungsbänder mit zugehörigen Abgabeelementen (4) übereinander angeordnet sind und/oder dass in Einbaulage oberhalb des Kottransportbandes ein Gitterboden (9) angeordnet ist.

12. Kottrocknungseinrichtung (1) nach einem der vorhergehenden Ansprüche, **dadurch gekennzeichnet,**
**dass** die Trocknungseinheit über dem Kottransportband (2) angeordnet ist und so auf das Kottransportband (2) einwirkt; oder
**dass** die Trocknungseinheit über einem separat zum besagten Kottransportband ausgebildeten Trocknungsband angeordnet ist, wobei das Trocknungsband vorzugsweise eine Länge aufweist, welche dem besagten Kottransportbandabschnitt (TB1, TB2) entspricht.

13. Kottrocknungseinrichtung (1) nach einem der vorhergehenden Ansprüche, **dadurch gekennzeichnet, dass** die Kottrocknungseinrichtung (1) weiterhin einen Controller (6) umfasst, mit welchem das Kottransportband (2) bzw. das Trocknungsband derart ansteuerbar ist, dass das Kottransportband (2) bzw. das Trocknungsband jeweils um eine Vorschublänge (VL), die einem Bruchteil der gesamten Förderlänge (L) entspricht, taktweise verfahrbar ist.

14. Stalleinrichtung umfassend eine Kottrocknungseinrichtung (1) nach einem der vorhergehenden Ansprüche, **dadurch gekennzeichnet, dass** die Stalleinrichtung weiterhin eine in Förderrichtung (F) gesehen nach der Kottrocknungseinrichtung angeordnete Pelletiervorrichtung vorgesehen ist, mit welcher der getrocknete Kot in Pellets pressbar ist.

15. Verfahren zum Betrieb einer Kottrocknungseinrichtung (1) nach einem der Ansprüche 1 bis 14, **dadurch gekennzeichnet, dass** das Kottransportband (2) mit dem darauf liegenden Kot (K) taktweise um den besagten Kottransportbandabschnitt (TB) bewegt wird, so dass in den Wirkbereich des besagten Abgabeelementes (4) ein erster Kottransportbandabschnitt (TB1) mit zu trocknendem Kot (K) zu liegen kommt oder dass der Kot auf das separate Trocknungsband bewegt wird, wobei nach einer bestimmten Verweildauer, das Kottransportband (2) bzw. das Trocknungsband um den besagten Kottransportbandabschnitt (TB) in Förderrichtung (F) weiter bewegt wird, so dass in den Wirkbereich des besagten Abgabeelementes (4) Kot eines zweiten Kottransportbandabschnitt (TB2)zu liegen kommt, wobei der getrocknete Kot (K) des ersten Kottransportbandabschnitt (TB2) vom Kottransportband (2) bzw. vom Trocknungsband abgeworfen wird.

16. Verfahren nach Anspruch 15, **dadurch gekennzeichnet, dass** die Verweildauer im Bereich von 1 bis 6 Stunden, insbesondere im Bereich von 1 bis 3 Stunden, liegt und/oder dass das Verfahren über einen Zeitraum von 24 Stunden ausgeübt wird.

## Claims

1. An excrement-drying installation (1) for livestock barns such as poultry barns, comprising an excrement transportation belt (2) for conveying the excrement along a conveying direction (F), wherein the excrement transportation belt (2) extends across a conveying length (L) and has an upper side (10) for receiving the excrement (K), and
a drying unit (3) having at least one dispensing element (4) which for drying the excrement (K) has at least one air nozzle (5) or a multiplicity of air nozzles (5) for spraying air onto the excrement (K) lying on the excrement transportation belt (2),
wherein the upper side (10) of the excrement transportation belt (2) for receiving the excrement (K) is divided into a plurality of excrement transportation belt portions (TB1, TB2) which lie behind one another in the conveying direction (F), wherein each excrement transportation belt portion (TB1, TB2) occupies a sub-area of the total upper side (10); and wherein the at least one dispensing element (4) is disposed in such a manner that said dispensing element (4) acts on an operative region which in terms of area corresponds to said sub-area, **characterized**
**in that** the length (TL) of said excrement transportation belt portion (TB), when viewed in the conveying direction (F), is chosen in such a manner that in one complete revolution of the excrement transportation belt within 24 hours, at a dwell time of 1 to 6 hours, each excrement transportation belt portion comes to lie below the at least one dispensing element (4).

2. The excrement-drying installation (1) as claimed in claim 1, **characterized in that** the excrement transportation belt portion (TB1, TB2), or the sub-area, respectively, extends across the entire width and across a sub-length (TL) of the excrement transportation belt.

3. The excrement-drying installation (1) as claimed in claim 1 or 2, **characterized in that** the at least one dispensing element (4) is disposed in such a manner that the entire width (B) of the excrement transportation belt (2), or of the drying belt, respectively, is capable of being sprayed with air, or **in that** the at least one dispensing element (4) extends within the excrement transportation belt portion (TB1, TB2) and is in particular disposed in such a manner that the entire width (B) of the excrement transportation belt (2), or of the drying belt, respectively, is capable of being sprayed with air.

4. The excrement-drying installation (1) as claimed in one of the preceding claims, **characterized in that** the dispensing element (4) is disposed so as to be locationally fixed in relation to the excrement transportation belt (2), or the drying belt, respectively, wherein the excrement transportation belt (2), or the drying belt, respectively, moves relative to the fixed dispensing element (4); and/or **in that** the dispensing element is disposed in the end region of the excrement transportation belt (2); and/or **in that** the at least one dispensing element (4) extends from the end (8) of the excrement transportation belt (2), or of the drying belt, respectively, counter to the conveying direction (F); and/or **in that** the at least one dispensing element (4) extends from one or both sides of the excrement transportation belt, or of the drying belt, respectively, transversely to the conveying direction.

5. The excrement-drying installation (1) as claimed in one of the preceding claims, **characterized in that** the at least one dispensing element (4) extends parallel to and/or transversely to the conveying direction (F) so as to be spaced apart from the upper side (10) of the excrement transportation belt (2), or the drying belt, respectively; and/or **in that** the at least one dispensing element (4) has the shape of a pipe.

6. The excrement-drying installation (1) as claimed in one of the preceding claims, **characterized in that** a multiplicity of dispensing elements (4) are disposed,
wherein the dispensing elements (4) preferably run so as to be parallel to each other and parallel to the conveying direction; and/or
wherein the dispensing elements (4) preferably run so as to be parallel to each other and transverse to the conveying direction;
wherein the dispensing elements (4) are disposed at uniform mutual spacings beside one another, preferably so as to proceed from the center of the excrement transportation belt (2), or of the drying belt, respectively; and/or
wherein the spacing between the upper side (10) of the excrement transportation belt (2), or of the drying belt, respectively, and the dispensing elements (4), when viewed transversely to the conveying direction (F), decreases toward the outside, as the spacing from the center of the excrement transportation belt (2), or of the drying belt, respectively, increases.

7. The excrement-drying installation (1) as claimed in one of the preceding claims, **characterized in that** a plurality of nozzles (5), when viewed in the direction of the conveying direction, and/or transversely to the conveying direction, are disposed at a spacing of 2 to 5 centimeters between each other; and/or **in that** the nozzles have a diameter of 4 to 20 millimeters; and/or **in that** the nozzle is a nozzle slot.

8. The excrement-drying installation (1) as claimed in one of preceding claims 1 to 3, **characterized in that** the at least one dispensing element (4) is disposed so as to be lateral to the excrement transportation belt (2), or beside the excrement transportation belt (2), respectively, wherein the at least one air nozzle (5) sprays the excrement (K) transversely to the conveying direction (F).

9. The excrement-drying installation (1) as claimed in claim 8, **characterized in that** a plurality of dispensing elements (4) are disposed behind one another in the conveying direction (F); and/or
**in that** the dispensing elements are disposed on both sides to the left and right of the excrement transportation belt (2), wherein the dispensing elements (4) in terms of the conveying direction (F) are disposed in a mutually alternating or a mutually opposite manner; and/or **in that** the dispensing elements (4) have air nozzles (5) in the shape of slots, or in the shape of sequentially disposed nozzle openings, wherein the air nozzles are oriented in the conveying direction (F); and/or
**in that** the dispensing elements (4) comprise at least one ventilator which suctions ambient air and dispenses the latter by way of the air nozzles (5); and/or **in that** the at least one dispensing element (4) is disposed so as to be locationally fixed in relation to the excrement transportation belt (2), or of the drying belt, respectively, wherein the excrement transportation belt (2), or the drying belt, respectively, moves relative to the fixed dispensing element (4).

10. The excrement-drying installation (1) as claimed in one of the preceding claims, **characterized in that** the drying unit (3) comprises a collector pipe (7) which is fluidically connected to the at least one dispensing element (4), wherein the at least one dispensing element (4) is supplied with air by way of the collector pipe (7).

11. The excrement-drying installation (1) as claimed in one of the preceding claims, **characterized in that**
said excrement transportation belt portion (TB), or the drying belt, respectively, when viewed in the conveying direction (F) has a length (TL) of 3 meters to 6 meters, or up to 10 meters; and/or
**in that** said conveying length (L) is at most 140 meters, preferably at most 100 meters, in particular at most 70 meters; and/or
**in that** the excrement-drying installation (1) furthermore comprises a measuring device for determining the degree of drying of the excrement, wherein the measuring device is disposed in the operative region of the dispensing element (4) and/or
**in that** a plurality of excrement transportation belts (2), or drying belts, respectively, having associated dispensing elements (4) are disposed on top of one another, and/or **in that** a mesh base (9) is disposed above the excrement transportation belt in the installed state.

12. The excrement-drying installation (1) as claimed in one of the preceding claims, **characterized in that**
the drying unit is disposed above the excrement transportation belt (2) and thus acts on the excrement transportation belt (2); or
**in that** the drying unit is disposed above a drying belt which is configured separately from said excrement transportation belt, wherein the drying belt preferably has a length which corresponds to that of said excrement transportation belt portion (TB1, TB2).

13. The excrement-drying installation (1) as claimed in one of the preceding claims, **characterized in that** the excrement-drying installation (1) furthermore comprises a controller (6) by way of which the excrement transportation belt (2), or the drying belt, respectively, is actuatable in such a manner that the excrement transportation belt (2), or the drying belt, respectively, is in each case displaceable in a cycled manner by one advancing length (VL) which corresponds to a fraction of the total conveying length (L).

14. A barn installation comprising an excrement-drying installation (1) as claimed in one of the preceding claims, **characterized in that** the barn installation, when viewed in the conveying direction (F), furthermore comprises a pelletizing device which is disposed downstream of the excrement-drying installation and by way of which the dried excrement is capable of being compressed so as to form pellets.

15. A method for operating an excrement-drying installation (1) as claimed in one of claims 1 to 14, **characterized in that** the excrement transportation belt (2) having the excrement (K) lying thereon is moved in a cycled manner by said excrement transportation belt portion (TB) such that a first excrement transportation belt portion (TB1) having excrement (K) to be dried comes to lie in the operative region of said dispensing element (4), or **in that** the excrement is moved onto the separate drying belt, wherein the excrement transportation belt (2), or the drying belt, respectively, after a specific dwell time is moved onward by said excrement transportation belt portion (TB) in the conveying direction (F) such that excrement of a second excrement transportation belt portion (TB2) comes to lie in the operative region of said dispensing element (4), wherein the dried excrement (K) of the first excrement transportation belt portion (TB2) is discharged from the excrement transportation belt (2), or from the drying belt, respectively.

16. The method as claimed in claim 15, **characterized in that** the dwell time is in the range from 1 to 6 hours, in particular in the range from 1 to 3 hours, and/or **in that** the method is carried out over a period of 24 hours

## Revendications

1. Agencement de séchage de fumier (1) pour étables d'animaux, tels que poulaillers, comprenant
une bande de transport de fumier (2) pour le transport du fumier le long d'une direction de transport (F), la bande de transport de fumier (2) s'étendant sur une longueur de transport (L) et ayant une face supérieure (10) pour recevoir le fumier (K), et
une unité de séchage (3) avec au moins un élément de distribution (4), comprenant au moins une buse d'air (5) ou une pluralité de buses d'air (5) pour aérer le fumier (K) se trouvant sur la bande de transport de fumier (2) avec de l'air pour sécher le fumier (K),
dans lequel la face supérieure (10) de la bande de transport de fumier (2), destinée à recevoir le fumier (K) est divisée en plusieurs sections de bande de transport à fumier (TB1, TB2) se trouvant l'une derrière l'autre dans la direction de transport (F), chaque section de bande de transport à fumier (TB1, TB2) correspondant à une surface partielle de la totalité de la face supérieure (10); et dans lequel l'au moins un élément de distribution (4) est agencé de telle manière qu'il agit sur une zone d'action qui correspond, en termes de surface, à ladite surface partielle, **caractérisé en ce que**
la longueur (TL) de ladite section de bande de transport de fumier (TB1, TB2), vue dans la direction de transport (F), est choisie de telle manière que lors d'un tour complet de la bande de transport de fumier en 24 heures, avec un temps de séjour de 1 à 6 heures, chaque section de bande de transport de fumier se retrouve une fois sous l'au moins un élément de distribution (4).

2. Agencement de séchage de fumier (1) selon la revendication 1, **caractérisé en ce que** la section de bande de transport de fumier (TB1, TB2) resp. la surface partielle s'étend sur toute la largeur et sur une longueur partielle (TL) de la bande de transport de fumier.

3. Agencement de séchage de fumier (1) selon la revendication 1 ou 2, **caractérisé en ce que** l'au moins un élément de distribution (4) est agencé de telle manière que toute la largeur (B) de la bande de transport de fumier (2) resp. de la bande de séchage peut être aéré avec de l' air resp. que l'au moins un élément de distribution (4) se prolonge dans la section de bande de transport de fumier (TB1, TB2) et est notamment agencé de telle manière que la totalité de la largeur (B) de la bande de transport de fumier (2) resp. la bande de séchage peut être aérée avec de l'air.

4. Agencement de séchage de fumier (1) selon l'une des revendications précédentes, **caractérisé en ce que** l'élément de distribution (4) est disposé de manière localement fixe par rapport à la bande de transport de fumier (2) ou à la bande de séchage, la bande de transport de fumier (2) ou la bande de séchage en mouvement par rapport à l'élément de distribution fixe (4); et/ou que l'élément de distribution est disposé dans la zone d'extrémité de la bande de transport de fumier (2) ; et/ou que l'au moins un élément de distribution (4) s'étend depuis l'extrémité (8) de la bande de transport de fumier (2) ou de la bande de séchage en contre de la direction de transport (F); et/ou que l'au moins un élément de distribution (4) s'étend d'un ou des deux côtés de la bande de transport de fumier resp. de la bande de séchage transversalement à la direction de transport.

5. Agencement de séchage de fumier (1) selon l'une des revendications précédentes, **caractérisé en ce que** l'au moins un élément de distribution (4) s'étend parallèlement et/ou transversalement à la direction de transport (F) à distance de la face supérieure (10) de la bande de transport de fumier (2) resp. de la bande de séchage; et/ou que l'au moins un élément de distribution (4) présente la forme d'un tube.

6. Agencement de séchage de fumier (1) selon l'une des revendications précédentes, **caractérisé en ce que** une pluralité d'éléments de distribution (4) sont disposés,
dans lequel les éléments de distribution (4) s'étendent de préférence parallèlement les uns aux autres et parallèlement à la direction de transport ; et/ou
dans lequel les éléments de distribution (4) s'étendent de préférence parallèlement les uns aux autres et transversalement à la direction de transport ;
dans lequel les éléments de distribution (4) sont disposés les uns à côté des autres à des distances régulières les uns des autres, de préférence à partir du centre de la bande de transport de fumier (2) resp. de la bande de séchage ; et/ou
la distance entre la face supérieure (10) de la bande de transport de fumier (2) resp. de la bande de séchage et les éléments de distribution (4), vu transversalement à la direction de transport (F), diminue avec l'augmentation de la distance latérale par rapport au centre de la bande de transport de fumier (2) ou la bande de séchage.

7. Agencement de séchage de fumier (1) selon l'une des revendications précédentes, **caractérisé en ce que** plusieurs buses (5), vues dans la direction de la direction de transport et/ou transversalement à la direction de transport, sont disposées à une distance de 2 à 5 centimètres l'une de l'autre; et/ou que les buses ont un diamètre de 4 à 20 millimètres ; et/ou que la buse est une fente de buse.

8. Agencement de séchage de fumier (1) selon l'une des revendications précédentes 1 à 3, **caractérisé en ce que** l'au moins un élément de distribution (4) est disposé latéralement à la bande de transport de fumier (2) ou à côté de la bande de transport à fumier (2), l'au moins une buse d'air (5) aérant le fumier (K) transversalement à la direction de transport (F).

9. Agencement de séchage de fumier (1) selon la revendication 8, **caractérisé en ce que** plusieurs éléments de distribution (4) sont disposés les uns derrière les autres dans le sens de la direction de transport (F), et/ou
que les éléments de distribution (4) sont disposés des deux côtés à gauche et à droite de la bande de transport de fumier (2), les éléments de distribution (4) étant disposés en alternance par rapport à la direction de transport (F) ou opposées l'un à l'autre, et/ou que les éléments de distribution (4) présentent des buses d'air (5) en forme de fentes ou en forme d'ouvertures de buses disposées en rangée, les buses d'air étant orientées dans la direction de transport (F) sont; et/ou
que les éléments de distribution (4) comportent au moins un ventilateur qui aspire l'air ambiant et le redistribue via les buses d'air (5) ; et/ou que l'au moins un élément de distribution (4) est disposé de manière localement fixe par rapport à la bande de transport de fumier (2) resp. à la bande de séchage, la bande de transport à fumier (2) resp. la bande de séchage se déplaçant par rapport à l'élément de distribution (4).

10. Agencement de séchage de fumier (1) selon l'une des revendications précédentes, **caractérisé en ce que** l'unité de séchage (3) comprend un tuyau de collecte (7) qui est relié fluidiquement à l'au moins un élément de distribution (4), l'au moins un élément (4) étant alimenté en air à travers le tuyau de collecte (7).

11. Agencement de séchage de fumier (1) selon l'une des revendications précédentes, **caractérisé en ce que**
ladite section de bande de transport de fumier (TB) resp. la bande de séchage, vue dans la direction de transport (F), a une longueur (TL) de 3 mètres à 6 mètres ou jusqu'à 10 mètres ; et/ou
la longueur de transport (L) est de 140 mètres au maximum, de préférence 100 mètres au maximum, en particulier 70 mètres au maximum ; et/ou
l'agencement de séchage de fumier (1) comprend en outre un dispositif de mesure pour déterminer le degré de séchage du fumier, le dispositif de mesure étant disposé dans la zone d'action de l'élément de distribution (4), et/ou
plusieurs bandes de transport de fumier (2) resp. bandes de séchage avec leur éléments de distribution (4) correspondants sont disposées l'une au-dessus de l'autre, et/ou que dans la position d'installation un sol en grille est disposé au-dessus de la bande de transport de fumier (2).

12. Agencement de séchage de fumier (1) selon l'une des revendications précédentes, **caractérisé en ce que**
l'unité de séchage est disposée au-dessus de la bande de transport de fumier (2) et agit ainsi sur la bande de transport de fumier (2) ; ou
l'unité de séchage est disposée au-dessus d'une bande de séchage formée séparément de ladite bande de transport de fumier, la bande de séchage ayant de préférence une longueur qui correspond à ladite section de bande de transport de fumier (TB1, TB2).

13. Agencement de séchage de fumier (1) selon l'une des revendications précédentes, **caractérisé en ce que** l'agencement de séchage de fumier (1) comprend en outre un contrôleur (6) avec lequel la bande de transport de fumier (2) ou la bande de séchage peut être commandée de telle manière à ce que la bande de transport de fumier (2) resp. la bande de séchage peut être déplacé dans des cadences d'une longueur d'avancement (VL), qui correspond à une fraction de la longueur de transport totale (L).

14. Dispositif d'étable comprenant un agencement de séchage de fumier (1) selon l'une des revendications précédentes, **caractérisé en ce que** le dispositif d'étable est en outre pourvu d'un dispositif de pelletisation, qui est disposé en aval de l'agencement de séchage de fumier, vu dans la direction de transport (F), et avec lequel le fumier séché peut être comprimé en pellets.

15. Procédé de fonctionnement d'un agencement de séchage de fumier (1) selon l'une des revendications 1 à 14, **caractérisé en ce que** la bande de transport de fumier (2) sur laquelle repose le fumier (K) est déplacée en cadence autour de ladite section de bande de transport de fumier (TB), de sorte que dans la zone active de l'élément de distribution (4) une première section de bande de transport de fumier (TB1) avec du fumier (K) à sécher vient s'arrêter, ou que le fumier est déplacé sur la bande de séchage séparé, où après un certaine durée de séjour, la bande de transport de fumier (2) ou la bande de séchage autour de ladite section de bande de transport à fumier (TB) est déplacée plus loin dans la direction de transport (F), de sorte que le fumier d'une deuxième section de bande de transport de fumier (TB2) vient s'arrêter dans la zone d'action dudit élément de distribution (4), le fumier séché (K) de la première section de bande de transport de fumier (TB2) est expulsé de la bande de transport de fumier (2) resp. de la bande de séchage.

16. Procédé selon la revendication 15, **caractérisé en ce que** la durée de séjour est comprise dans la plage de 1 à 6 heures, notamment dans la plage entre 1 et 3 heures, et/ou que le procédé est réalisé sur une durée de 24 heures.
